(19) Europäisches Patentamt
European Patent Office
Office européen des brevets

(11) **EP 4 495 621 A1**

(12) **EUROPEAN PATENT APPLICATION**

(43) Date of publication:
**22.01.2025 Bulletin 2025/04**

(21) Application number: **23186982.7**

(22) Date of filing: **21.07.2023**

(51) International Patent Classification (IPC):
**G01S 7/40** (2006.01)          **G01S 13/89** (2006.01)
**G01S 17/89** (2020.01)

(52) Cooperative Patent Classification (CPC):
**G01S 7/4091; G01C 25/00; G01S 7/4808;**
**G01S 13/89; G01S 17/89**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Aptiv Technologies AG**
**8200 Schaffhausen (CH)**

(72) Inventors:
- **Westerhoff, Jens**
  **44797 Bochum (DE)**
- **Spata, Dominic**
  **58454 Witten (DE)**
- **Kästner, Florian**
  **44793 Bochum (DE)**
- **Iurgel, Uri**
  **42369 Wuppertal (DE)**

(74) Representative: **Manitz Finsterwald**
**Patent- und Rechtsanwaltspartnerschaft mbB**
**Martin-Greif-Strasse 1**
**80336 München (DE)**

(54) **METHODS AND SYSTEMS FOR CALIBRATING A MOTION SENSOR**

(57)     A computer implemented method for calibrating a motion sensor arranged at a vehicle and configured to output a raw motion measurement value indicative of a current motion condition of the vehicle comprises: computing processed motion measurement values by modifying the outputted raw motion measurement value based on a set of different calibration parameters, monitoring the vicinity of the vehicle by means of an environment perception sensor, determining a set of occupancy maps by means of mapping data acquired by the environment perception sensor in accordance with a motion model for the vehicle, wherein each of the processed motion measurement values is used to establish the motion model for one of the occupancy maps, and selecting, based on a comparison of the determined occupancy maps, one of the different calibration parameters for modifying subsequently outputted raw motion measurement values.

Reiceiving a raw motion measurement value from a motion sensor arranged at a vehicle
402

Computing processed motion measurement values by modifying the raw motion measurement value based on a set of different calibration parameters
404

Monitoring the vicinity of the vehicle by means of an object detection sensor
406

Determining a set of occupancy maps by means of mapping data acquired by the object detection sensor
408

Selecting one of different calibration parameters based on a comparison of the determined occupancy maps
410

400

Fig. 3

EP 4 495 621 A1

**Description**

FIELD

The present disclosure relates to methods and systems for calibrating a motion sensor arranged at a vehicle and configured to output a raw motion measurement value indicative of a current motion condition of the vehicle.

BACKGROUND

Information on the ego motion of a vehicle may be important in various aspects of driving, in particular for advanced driver assistance systems (ADAS) and autonomous driving applications. Sensors for gathering ego motion information may need a calibration to compensate for manufacturing tolerances and dependencies of the sensor output on environmental conditions such as the ambient temperature or the tire pressure. The use of incorrect ego motion information may be detrimental to various driving applications.

Accordingly, there is a need to provide a reliable calibration of motion sensors.

SUMMARY

The present disclosure provides a computer implemented method, a computer system, a non-transitory computer readable medium and a vehicle according to the independent claims. Embodiments are given in the dependent claims, the description and the drawings.

In one aspect, the present disclosure is directed at a computer implemented method for calibrating a motion sensor arranged at a vehicle and configured to output a raw motion measurement value indicative of a current motion condition of the vehicle, the method comprising the following steps: computing processed motion measurement values by modifying the outputted raw motion measurement value based on a set of different calibration parameters; monitoring the vicinity of the vehicle by means of at least one environment perception sensor; determining a set of occupancy maps by means of mapping data acquired by the environment perception sensor in accordance with a motion model for the vehicle, wherein each of the processed motion measurement values is used to establish the motion model for one of the occupancy maps; and selecting, based on a comparison of the determined occupancy maps, one of the different calibration parameters for modifying subsequently outputted raw motion measurement values.

Thus, the environment perception sensor may be used to calibrate the motion sensor. The motion sensor may be calibrated based on the quality of an occupancy map that has been determined with the use of data provided by the motion sensor. It may be assumed that the calibration is good if the occupancy map has a high quality, i. e. shows clear and distinct objects, and the calibration is bad if the occupancy map has a low quality, i. e. rather shows smeared or blurred objects. The disclosed calibration process may be carried out onboard and online, i. e. while the motion sensor is operating. It is not necessary to move the vehicle to a test stand.

An occupancy map, also referred to as an occupancy grid or an occupancy map grid, is a map of cells containing information of the cell being occupied by some kind of object. The cells may have a fixed width, length and height. Occupancy maps are widely used in advanced driver assistance systems and autonomous driving applications, because an occupancy map can be interpreted as a map of obstacles around the vehicle. Each occupied cell may represent a non-drivable area. An inverted occupancy map can be interpreted as a free space map showing the drivable regions.

The environment perception sensor may provide reflections from objects in the form of point clouds. The term "mapping" may refer to the process of evaluating the correspondence between successively acquired point clouds. To compensate for shifts of points due to the ego motion of the vehicle, the positions of the points may be adapted in accordance with the motion model. The motion model may include a constant linear motion with a velocity determined by the motion sensor. The motion model may further include a curve component based on a yaw rate provided by a gyroscope arranged at the vehicle. Dependent on the application, a more complex motion model may be provided.

According to an embodiment, the method may comprise determining a sharpness value for each of the determined occupancy maps and selecting the calibration parameter based on a comparison of the determined sharpness values. The sharpness value may be an indicator for the quality of the occupancy map. I. e. the quality of the mapping process and thus the accuracy of the motion measurement value may be assessed by the sharpness value. Thus, the quality of the occupancy map may be used to optimize the calibration process.

According to an embodiment, an extremal value of the sharpness values may be determined and the calibration parameter used for determining the occupancy map associated with the extremal value may be selected. In other words, the occupancy map having the highest or lowest sharpness value may be determined and the calibration parameter on which the motion model of this occupancy map is based may be selected. Depending on the application, the sharpness value may have a positive or a negative correlation with the image sharpness of the occupancy map.

According to an embodiment, the sharpness value may be determined according to the following sharpness

metric:

$$P_+^{(f)} = \sum_{(x,y)} \sqrt{1 - P_{(x,y)}^{(f)}} \quad \forall\, P_{(x,y)}^{(f)} \geq 0.5$$

$$P_-^{(f)} = \sum_{(x,y)} \sqrt{P_{(x,y)}^{(f)}} \quad \forall\, P_{(x,y)}^{(f)} < 0.5$$

$$S^{(f)} = P_+^{(f)} + P_-^{(f)}$$

wherein $S^{(f)}$ is the sharpness value of the occupancy map which has been determined on the basis of the calibration factor $f$ and $P_{(x,y)}^{(f)}$ is the occupancy probability for a position $x$, $y$ in the occupancy map determined on the basis of the calibration factor $f$. Such a sharpness metric punishes probability values close to the extremes 0 and 1 less than values close to 0.5. This accounts for the circumstance that a high-quality occupancy map has many extremes, i. e. an accumulation of occupancy probabilities at positions where there is an object and no probability at positions where there is no object, and that a low-quality occupancy map rather has a distributed occupancy probability, i. e. a "smeared" appearance.

According to an embodiment, the vicinity of the vehicle may be monitored while the vehicle is moving.

According to an embodiment, the motion sensor may be an odometry sensor. The odometry sensor may be mounted to a wheel or a shaft of the vehicle. The odometry sensor may sense the revolution speed of a wheel of the vehicle and determine the velocity of the vehicle based on the sensed revolution speed and a stored tire diameter value. Changes of the air pressure may result in an incorrect velocity value. A calibration in accordance with the present disclosure may correct the outputted velocity values. According to another embodiment, the motion sensor is a gyroscope outputting a yaw rate of the vehicle.

According to an embodiment, the raw motion measurement value may represent a vehicle velocity. The raw motion measurement value may also represent a component of the vehicle velocity in a predefined direction.

According to an embodiment, the environment perception sensor may be a radar sensor, a lidar sensor or a camera. Such a sensor is able to perceive the environment of the vehicle. The point clouds may correspond to successive scans or frames of the environment perception sensor. In the context of the present disclosure, an object point outputted by the environment perception sensor corresponds to a detected surface spot of an object, for example a stationary object, present in the vicinity of the vehicle.

According to an embodiment, the set of different calibration parameters may comprise a plurality of different scaling factors and the processed motion measurement values may be computed by multiplying the raw motion measurement value with the different scaling factors.

According to an embodiment, the set of different calibration parameters may comprise a plurality of different bias values and the processed motion measurement values may be computed by adding the different bias values to the raw motion measurement value.

The set of different calibration parameters may comprise both a plurality of different scaling factors and a plurality of different bias values. For example, the set of different calibration parameters may comprise a matrix-like or tensor-like structure of different scaling factors and biases.

The use of a scaling factor and a bias for modifying the raw motion measurement value corresponds to a linear sensor model. However, dependent on the application, a more complex sensor model may be provided for the motion sensor. For example, the sensor model of the motion sensor may be based on a polynomial function. Correspondingly, a number of three or more calibration parameters may be needed to calibrate the motion sensor.

According to an embodiment, the different calibration parameters are spread over a range of values extending in positive direction and in negative direction from an expected value, for example using a predefined step size. The size of the range may be defined on the basis of the application and/or an estimation accuracy.

According to an embodiment, data acquired by the environment perception sensor may be collected for a predetermined number of time intervals and each of the occupancy maps may be determined by overlaying the collected data in a spatial representation of the vicinity of the vehicle. Probabilities for the presence of an object at a defined position may be calculated based on the overlaid data.

In another aspect, the present disclosure is directed at a computer system, said computer system being configured to carry out several or all steps of the computer implemented method described herein.

The computer system may comprise a processing unit, at least one memory unit and at least one non-transitory data storage. The non-transitory data storage and/or the memory unit may comprise a computer program for instructing the computer to perform several or all steps or aspects of the computer implemented method described herein.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

The present disclosure is also directed at a vehicle, for example a motor vehicle or automobile, said vehicle comprising the computer system described herein, the motion sensor and the environment perception sensor.

DRAWINGS

Exemplary embodiments and functions of the present disclosure are described herein in conjunction with the following drawings, showing schematically:

Fig. 1    a top view of a vehicle in a traffic space.
Fig. 2    an illustration of a sharpness value of an occupancy map in dependence on a calibration factor.
Fig. 3    a flow diagram illustrating a method for calibration a motion sensor according to various embodiments.
Fig. 4    a computer system with a plurality of computer hardware components configured to carry out steps of a computer implemented method for calibrating a motion sensor according to various embodiments.

DETAILED DESCRIPTION

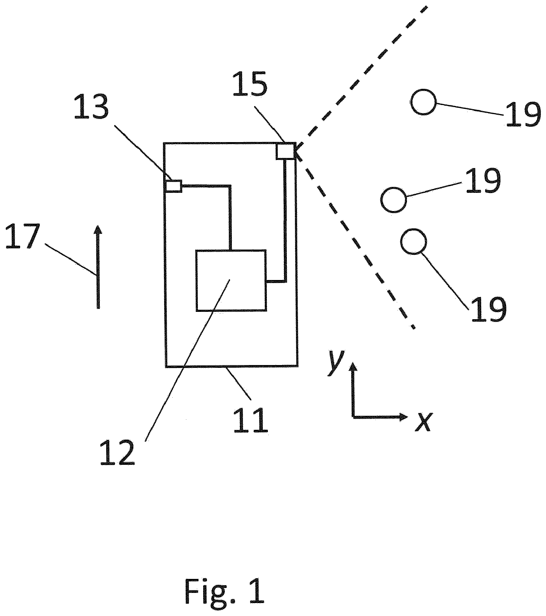

Fig. 1 depicts, in a top view, a motor vehicle or host vehicle 11 including a computer system 12. A motion sensor 13 and an environment perception sensor 15 are arranged at the host vehicle 11 and connected to the computer system 12. The motion sensor 13 is configured to provide an ego motion information in the form of a raw motion measurement value such as the current velocity $v$ of the host vehicle 11 in the driving direction 17. According to an embodiment, the motion sensor 13 may be an odometry sensor.

The environment perception sensor 15 may be a radar (radio detection and ranging) sensor, a lidar (light detection and ranging) sensor and/or a camera, for example a time-of-flight camera. By means of the environment perception sensor 15, objects 19 present in the environment of the host vehicle 11, such as trees, posts, pedestrians or other vehicles, may be detected. Further environment perception sensors (not shown) may be arranged at the host vehicle 11 to cover a wider area. Also, an environment perception system including a combination of different types of perception sensors may be provided. The computer system 12 receives data from the motion sensor 13 and from the environment perception sensor 15 and provides an "advanced driver assistance" functionality or an autonomous driving functionality based on an evaluation of the received data.

According to various embodiments, an occupancy map of the vicinity of the host vehicle 11 may be determined by accumulating readings from the environment perception sensor 15 and transforming the accumulated sensor readings to probabilities over time. The occupancy map may include a two-dimensional or three-dimensional grid of cells, wherein an occupancy probability or a free space probability is assigned to each of the cells, as is known in the art. The occupancy probability may be updated after each data acquisition process, i. e. after each frame or scan of the environment perception sensor 15. The occupancy map shows obstacles in form of stationary objects 19 and thus also shows the drivable space, i. e. the space which is free from obstacles.

When the host vehicle 11 is moving, the data received from the environment perception sensor 15 have to be mapped according to a motion model. In other words, it is necessary to shift the object reflections provided by the environment perception sensor in a certain time frame relative to the object reflections of an earlier time frame to account for the ego motion of the host vehicle 11. To establish the motion model, the output of the motion sensor 13 is used. However, the raw velocity value $v$ as outputted by the motion sensor 13 is dependent on manufacturing tolerances and environmental conditions and therefore needs to be calibrated. This is performed by computing a processed velocity value $\hat{v}$. In a simplified form, which has turned out to be sufficient for a plurality of applications, the calibration may be based on a scaling factor $f$ and a constant bias $b$ according to the following formula:

$$\hat{v} = v * f + b$$

wherein $v$ is the raw velocity value as outputted by the motion sensor 13, $\hat{v}$ is the processed velocity value as computed by the computer system 12, $f$ is the scaling factor and $b$ is the bias. For $f = 1$ and $b = 0$, the processed velocity $\hat{v}$ is equal to the raw velocity $v$.

For a calibration of the motion sensor 13, the calibration parameters $f$ and $b$ may be estimated. According to various embodiments, the point clouds acquired by the environment perception sensor 15 are collected and stored in a storage of the computer system 12 for a given number of timestamps or time frames, for example for 10 time frames. The point clouds are mapped via an occupancy grid mapping (OGM) process with the free parameters $f$ and $b$ to generate an occupancy map $P_{(x,y)}^{(f,b)}$, wherein $x$ and $y$ are two-dimensional spatial coordinates as shown in Fig. 1.

A set of different calibration parameters $f$, $b$ based on predefined value ranges may be determined. The value ranges may extend around expected values. For example, the following value ranges may be selected:

$$f = [0.8; 1.2]; \quad b = [-0.1; 0.1]; \quad \Delta s = 0.01$$

wherein $\Delta s$ is the step size. The resulting set of calibration parameters includes a plurality of pairs $f, b$.

Based on the set of calibration parameters, a set of occupancy grid maps $P_{(x,y)}^{(f,b)}$ is determined. For each of the occupancy grid maps $P_{(x,y)}^{(f,b)}$, a sharpness value is determined according to the following sharpness metric:

$$P_+^{(f,b)} = \sum_{(x,y)} \sqrt{1 - P_{(x,y)}^{(f,b)}} \quad \forall \, P_{(x,y)}^{(f,b)} \geq 0.5$$

$$P_-^{(f,b)} = \sum_{(x,y)} \sqrt{P_{(x,y)}^{(f,b)}} \quad \forall \, P_{(x,y)}^{(f,b)} < 0.5$$

$$S^{(f,b)} = P_+^{(f,b)} + P_-^{(f,b)}$$

wherein $S^{(f,b)}$ is the sharpness value of the occupancy map determined on the basis of the calibration factors $f$ and $b$ and $P_{(x,y)}^{(f,b)}$ is the occupancy probability for a position $x,y$ in the occupancy map determined on the basis of the calibration factors $f$ and $b$. Such a sharpness metric punishes probability values close to the extremes 0 and 1 less than values close to 0.5. This accounts for the circumstance that a high-quality occupancy map has many extremes, i. e. an accumulation of occupancy probabilities at positions where there is an object and no probability at positions where there is no object, and that a low-quality occupancy map rather has a distributed occupancy probability, i. e. a "smeared" appearance.

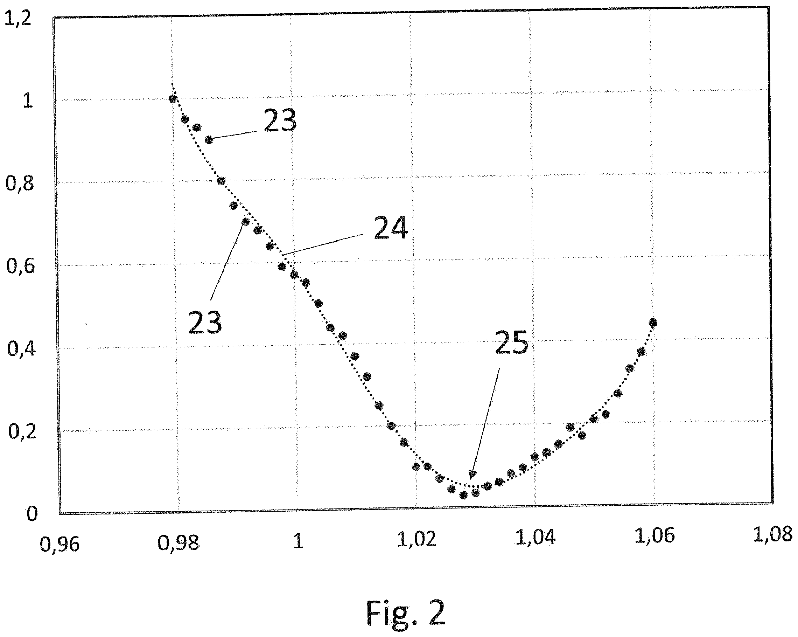

Fig. 2 exemplarily shows the sharpness value $S^{(f,b)}$ (vertical axis) in dependence of the scaling factor $f$ (horizontal axis). Individually computed values are depicted as points 23. Further, a fitted curve 24 is shown. The minimum 25 of the sharpness values $S^{(f,b)}$, which may be the lowest point 23 or the minimum of the fitted curve 24, defines the optimal value for $f$, which may be referred to as $f_{opt}$. An analogous process is carried out to find the optimal value for $b$, which may be referred to as $b_{opt}$. By means of a two-dimensional minimum search, both optimum values $f_{opt}$, $b_{opt}$ may be found in a common process.

The optimal values $f_{opt}$ and $b_{opt}$ may be selected as calibration parameters for modifying subsequently outputted raw velocity values $v$. In other words, $f_{opt}$ and $b_{opt}$ may be determined as current calibration parameters and may be stored in a memory of the computer system 12. The estimated parameters may be used by any application module which relies on an ego motion information from the motion sensor 13 and may be re-estimated whenever necessary.

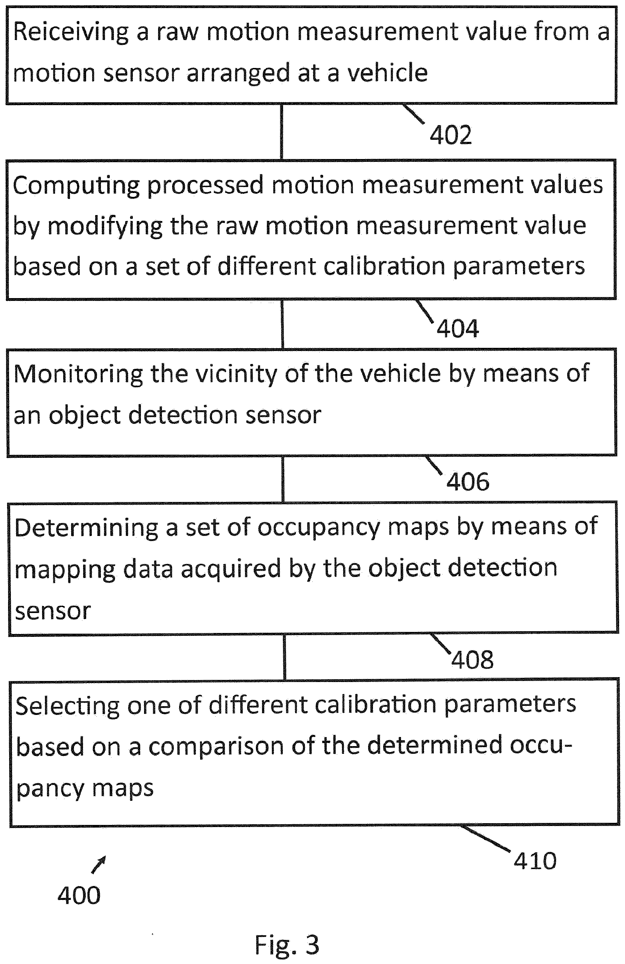

Fig. 3 shows a flow diagram 400 illustrating a method for calibrating the motion sensor 13 shown in Fig. 1.

At 402, a raw motion measurement value may be received from a motion sensor. At 404, processed motion measurement values may be computed by modifying the outputted raw motion measurement value based on a set of different calibration parameters. At 406, the vicinity of the vehicle is monitored by means of the environment perception sensor 13. At 408, a set of occupancy maps is determined by means of mapping data acquired by the environment perception sensor in accordance with a motion model for the vehicle, wherein each of the processed motion measurement values is used to establish the motion model for one of the occupancy maps. At 410, one of the different calibration parameters is selected for modifying subsequently outputted raw motion measurement values based on a comparison of the determined occupancy maps.

The calibration method illustrated in Fig. 3 may be carried out on a regular temporal basis, upon receiving an error signal and/or after a repair process has been carried out.

According to various embodiments, the method may further include determining a sharpness value for each of the determined occupancy maps and selecting the calibration parameter based on a comparison of the determined sharpness values.

According to various embodiments, the method may further include determining an extremal value of the sharpness values and selecting the calibration parameter used for determining the occupancy map associated with the extremal value.

According to various embodiments, the method may further include determining the sharpness value according to the following sharpness metric:

$$P_+^{(f)} = \sum_{(x,y)} \sqrt{1 - P_{(x,y)}^{(f)}} \quad \forall\, P_{(x,y)}^{(f)} \geq 0.5$$

$$P_-^{(f)} = \sum_{(x,y)} \sqrt{P_{(x,y)}^{(f)}} \quad \forall\, P_{(x,y)}^{(f)} < 0.5$$

$$S^{(f)} = P_+^{(f)} + P_-^{(f)}$$

wherein $S^{(f)}$ is the sharpness value of the occupancy map determined on the basis of the calibration factor $f$ and $P_{(x,y)}^{(f)}$ is the occupancy probability for a position $x, y$ in the occupancy map determined on the basis of the calibration factor $f$.

According to various embodiments, the method may further include monitoring the vicinity of the vehicle while the vehicle is moving.

According to various embodiments, the motion sensor may be an odometry sensor.

According to various embodiments, the raw motion measurement value may represent a vehicle velocity.

According to various embodiments, the environment perception sensor may be a radar sensor, a lidar sensor or a camera.

According to various embodiments, the set of different calibration parameters may comprise a plurality of different scaling factors and the method may further include computing the processed motion measurement values by multiplying the raw motion measurement value with the different scaling factors.

According to various embodiments, the set of different calibration parameters may comprise a plurality of different bias values and the method may further include computing the processed motion measurement values by adding the different bias values to the raw motion measurement value.

According to various embodiments, the different calibration parameters may be spread over a range of values extending in positive direction and in negative direction from an expected value.

According to various embodiments, the method may further include collecting data acquired by the environment perception sensor for a predetermined number of time intervals and determining each of the occupancy maps by overlaying the collected data in a spatial representation of the vicinity of the vehicle.

Each of the steps 402, 404, 406, 408, 410 and the further steps described above may be performed by computer hardware components.

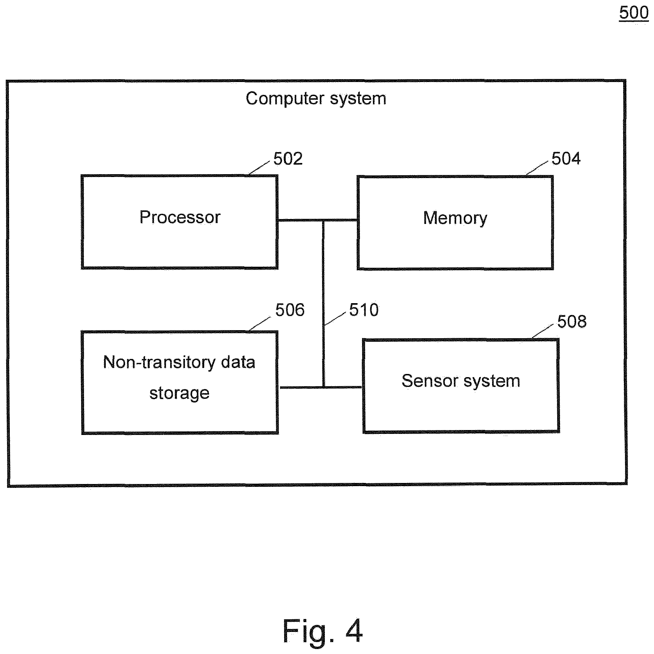

Fig. 4 shows a computer system 500 with a plurality of computer hardware components configured to carry out steps of a computer implemented method for calibrating a motion sensor according to various embodiments. The computer system 500 may include a processor 502, a memory 504, and a non-transitory data storage 506. A sensor system 508 may be may be provided as part of the computer system 500 (like illustrated in Fig. 5), or may be provided external to the computer system 500. The sensor system 508 may include a motion sensor 13 and an environment perception sensor 15 as shown in Fig. 1.

The processor 502 may carry out instructions provided in the memory 504. The non-transitory data storage 506 may store a computer program, including the instructions that may be transferred to the memory 504 and then executed by the processor 502. The sensor system 508 may be used for capturing the vehicle velocity and for perceiving objects in the vicinity of the vehicle.

The processor 502, the memory 504, and the non-transitory data storage 506 may be coupled with each other, e.g. via an electrical connection 510, such as e.g. a cable or a computer bus or via any other suitable electrical connection to exchange electrical signals. The sensor system 508 may be coupled to the computer system 500, for example via an external interface, or may be provided as parts of the computer system (in other words: internal to the computer system, for example coupled via the electrical connection 510).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 500.

Reference numeral list

| 11  | host vehicle |
| 12  | computer system |
| 13  | motion sensor |
| 15  | environment perception sensor |
| 17  | driving direction |
| 19  | object |
| 23  | point |
| 24  | fitted curve |
| 25  | minimum |
| 400 | flow diagram illustrating a method for calibrating a motion sensor |
| 402 | step of receiving a raw motion measurement value from a motion sensor arranged at a vehicle |
| 404 | step of computing processed motion measurement values by modifying the raw motion measurement value based on a set of different calibration parameters |
| 406 | step of monitoring the vicinity of the vehicle by means of an environment perception sensor |
| 408 | step of determining a set of occupancy maps by means of mapping data acquired by the environment perception sensor |
| 410 | step of selecting one of different calibration parameters based on a comparison of the determined occupancy maps |
| 500 | computer system according to various embodiments |
| 502 | processor |
| 504 | memory |
| 506 | non-transitory data storage |
| 508 | sensor system |
| 510 | connection |

**Claims**

1. Computer implemented method for calibrating a motion sensor (13) arranged at a vehicle (11) and configured to output a raw motion measurement value indicative of a current motion condition of the vehicle (11),
the method comprising:

- computing processed motion measurement values by modifying the outputted raw motion measurement value based on a set of different calibration parameters,
- monitoring the vicinity of the vehicle (11) by means of at least one environment perception sensor (15),
- determining a set of occupancy maps by means of mapping data acquired by the environment perception sensor (15) in accordance with a motion model for the vehicle (11), wherein each of the processed motion measurement values is used to establish the motion model for one of the occupancy maps, and
- selecting, based on a comparison of the determined occupancy maps, one of the different calibration parameters for modifying subsequently outputted raw motion measurement values.

2. The computer implemented method of claim 1,
   wherein a sharpness value is determined for each of the determined occupancy maps and the calibration parameter is selected based on a comparison of the determined sharpness values.

3. The computer implemented method of claim 2,
   wherein an extremal value (25) of the sharpness values is determined and the calibration parameter used for determining the occupancy map associated with the extremal value is selected.

4. The computer implemented method of at least one of claims 2 to 3, wherein the sharpness value is determined according to the following sharpness metric:

$$P_+^{(f)} = \sum_{(x,y)} \sqrt{1 - P_{(x,y)}^{(f)}} \quad \forall \, P_{(x,y)}^{(f)} \geq 0.5$$

$$P_-^{(f)} = \sum_{(x,y)} \sqrt{P_{(x,y)}^{(f)}} \quad \forall \, P_{(x,y)}^{(f)} < 0.5$$

$$S^{(f)} = P_+^{(f)} + P_-^{(f)}$$

wherein $S^{(f)}$ is the sharpness value of the occupancy map determined on the basis of the calibration factor $f$ and $P_{(x,y)}^{(f)}$ is the occupancy probability for a position $x, y$ in the occupancy map determined on the basis of the calibration factor $f$.

5. The computer implemented method of at least one of claims 1 to 4, wherein the vicinity of the vehicle (11) is monitored while the vehicle (11) is moving.

6. The computer implemented method of at least one of claims 1 to 5, wherein the motion sensor (13) is an odometry sensor.

7. The computer implemented method of at least one of claims 1 to 6, wherein the raw motion measurement value represents a vehicle velocity.

8. The computer implemented method of at least one of claims 1 to 7, wherein the environment perception sensor (15) is a radar sensor, a lidar sensor or a camera.

9. The computer implemented method of at least one of claims 1 to 8, wherein the set of different calibration parameters comprises a plurality of different scaling factors and the processed motion measurement values are computed by multiplying the raw motion measurement value with the different scaling factors.

10. The computer implemented method of at least one of claims 1 to 9, wherein the set of different calibration parameters comprises a plurality of different bias values and the processed motion measurement values are computed by adding the different bias values to the raw motion measurement value.

11. The computer implemented method of at least one of claims 1 to 10 wherein the different calibration parameters are spread over a range of values extending in positive direction and in negative direction from an expected value.

12. The computer implemented method of at least one of claims 1 to 11, wherein data acquired by the environment perception sensor (15) are collected for a predetermined number of time intervals and each of the occupancy maps is determined by overlaying the collected data in a spatial representation of the vicinity of the vehicle (11).

13. Computer system (500), the computer system (500) being configured to carry out the computer implemented method of at least one of claims 1 to 12.

14. Non-transitory computer readable medium comprising instructions for carrying out the computer implemented method of at least one of claims 1 to 12.

15. Vehicle (11) comprising the computer system (500) of claim 13, the motion sensor (13), and the environment perception sensor (15).

Fig. 1

Fig. 2

EP 4 495 621 A1

Reiceiving a raw motion measurement value from a motion sensor arranged at a vehicle

402

Computing processed motion measurement values by modifying the raw motion measurement value based on a set of different calibration parameters

404

Monitoring the vicinity of the vehicle by means of an object detection sensor

406

Determining a set of occupancy maps by means of mapping data acquired by the object detection sensor

408

Selecting one of different calibration parameters based on a comparison of the determined occupancy maps

410

400

Fig. 3

500

Computer system

Processor — 502

Memory — 504

Non-transitory data storage — 506

510

Sensor system — 508

Fig. 4

Europäisches
Patentamt

European
Patent Office

Office européen
des brevets

# EUROPEAN SEARCH REPORT

Application Number

**EP 23 18 6982**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FAN XIAOYUN ET AL: "An incremental LiDAR/POS online calibration method", MEASUREMENT SCIENCE AND TECHNOLOGY, IOP, BRISTOL, GB, vol. 34, no. 8, 9 May 2023 (2023-05-09), XP020453293, ISSN: 0957-0233, DOI: 10.1088/1361-6501/ACCC21 [retrieved on 2023-05-09] * abstract * * Section 1 to 4 * | 1-15 | INV. G01S7/40 G01S13/89 G01S17/89 |
| X | CN 114 625 121 A (CHENGDU SCIENCE AND ENGINEERING UNIV) 14 June 2022 (2022-06-14) * paragraphs [0027] – [0054], [0097], [0102], [0103], [0105], [0112], [0121] – [0125], [0127] – [0131] * * paragraphs [0143], [0144] * | 1-15 | |
| X | WO 2019/032588 A1 (ZOOX INC [US]) 14 February 2019 (2019-02-14) * paragraphs 16-21,26-45,63-94,119-145 – pages 1,2,4-11 * | 1-15 | TECHNICAL FIELDS SEARCHED (IPC) G01S |

The present search report has been drawn up for all claims

| Place of search | Date of completion of the search | Examiner |
|---|---|---|
| Munich | 19 October 2023 | Fernández Cuenca, B |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    **EP 23 18 6982**

This annex lists the patent family members relating to the patent documents cited in the above-mentioned European search report.
The members are as contained in the European Patent Office EDP file on
The European Patent Office is in no way liable for these particulars which are merely given for the purpose of information.

**19-10-2023**

| Patent document cited in search report | | Publication date | Patent family member(s) | | Publication date |
|---|---|---|---|---|---|
| CN 114625121 | A | 14-06-2022 | NONE | | |
| WO 2019032588 | A1 | 14-02-2019 | CN | 111183370 A | 19-05-2020 |
| | | | EP | 3665501 A1 | 17-06-2020 |
| | | | JP | 7196156 B2 | 26-12-2022 |
| | | | JP | 2020530569 A | 22-10-2020 |
| | | | JP | 2023025266 A | 21-02-2023 |
| | | | WO | 2019032588 A1 | 14-02-2019 |

EPO FORM P0459

For more details about this annex : see Official Journal of the European Patent Office, No. 12/82